# EUROPEAN PATENT SPECIFICATION

(11) **EP 3 124 382 B1**
(45) Date of publication and mention of the grant of the patent: **06.11.2019**
(21) Application number: 15400034.3
(22) Date of filing: 30.07.2015
(51) Int. Cl.: B64D 11/06, B64D 25/06, B60R 22/18

(54) **A SEAT BENCH DEVICE WITH A SEAT BENCH COMPONENT AND AT LEAST ONE RESTRAINING UNIT**
SITZBANKVORRICHTUNG MIT EINER SITZBANKKOMPONENTE UND MINDESTENS EINER RÜCKHALTEEINHEIT
DISPOSITIF DE BANC DE SIÈGE AVEC UN COMPOSANT DE BANQUETTE DE SIÈGE ET AU MOINS UNE UNITÉ DE RETENUE

(43) Date of publication of application: 01.02.2017
(73) Proprietor: AIRBUS HELICOPTERS DEUTSCHLAND GmbH, 86609 Donauwörth (DE)
(72) Inventor: Herrmann, Marius, 86368 Gersthofen (DE)
(74) Representative: GPI & Associés

(56) References cited:
- EP-A1- 2 738 095
- US-A1- 2006 061 202
- US-A1- 2006 237 586

## Description

The invention is related to a seat bench device with a seat bench component and at least one restraining unit, said seat bench device comprising the features of claim 1. Aircrafts, and in particular rotorcrafts, are equipped with seat bench devices having seat bench components that are adapted for providing a plurality of seats for passengers of the aircraft. In the context of the present invention, the term "passenger" designates any person that is transported on board of the aircraft and, thus, supposed to occupy a seat in the aircraft. Therefore, such passengers are also referred to as the "occupants" of the seat bench components, i. e. as the "seat bench occupants".

Usually, the requirements for a configuration of a given seat bench device is based on a predefined body size, i. e. shoulder width, of a presumed largest seat occupant. The predefined body size is adopted as minimum seat width in seat development and used as a basis for manufacturing individual seats that are stringed together to define seat bench devices, wherein all seats are provided with identical and usually too large seat geometries. Such a seat bench device is e. g. described in the document FR 2 684 067 A1.

However, with such seat bench devices a predetermined seat density in the aircraft cannot be optimized for seat bench occupants with different body sizes. In other words, seat bench occupants having smaller body sizes than the predefined body size cannot sit closer together than seat bench occupants with larger body sizes in order to increase a possible number of seated occupants, as an underlying seating distance and density is only dependant on a respective seat geometry of each individual seat and the position of corresponding seat belts. Furthermore, such a seat bench device with stringed individual seats cannot be used as medical gurney, if necessary, as there is no continuous seating surface available. It should be noted that in the context of the present invention the term "continuous seating surface" should be construed as defining a seating surface that is uninterrupted, i. e. not interrupted by gaps, protrusions and so on.

The document US 2008/0191540 A1 describes a seat bench device with individual seats that are stringed together such that they define an elongated seating surface that is interrupted by gaps. Each stringed individual seat is provided with two separate restraining systems that allow seating of seat bench occupants with different body sizes on the seat bench device.

However, while the restraining systems are adapted for seat bench occupants with different body sizes, seat bench occupants having smaller body sizes can still not sit closer together than seat bench occupants with larger body sizes to increase a possible number of seated occupants. Furthermore, while the seat bench device could be used as medical gurney due to the elongated seating surface, it still does not define a continuous seating surface.

The documents DE 10 2013 002 887 A1, WO 2014/035549 A1 and EP 2 479 072 A1 describe seat bench devices with continuous seating surfaces. These seat bench devices are provided with configurable restraining systems that can be adapted for use with seat bench occupants having different body sizes by means of a reconfiguration of an underlying seating position scheme. The restraining systems are all seat belt-based and comprise respective seat belts that can be fastened to associated engagement members.

However, in these seat bench devices the seat belts of the corresponding restraining systems are arranged at predetermined positions, i. e. fixedly and unmovably, and can thus either not be moved when re-configuring the underlying seating position scheme, as e. g. according to the document EP 2 479 072 A1, or must be removed entirely, i. e. demounted, as e. g. according to the documents DE 10 2013 002 887 A1 and WO 2014/035549 A1. Consequently, these seat bench devices are invariable and reconfiguration thereof is complicated and time-consuming.

It should be noted that according to the document EP 2 479 072 A1 the engagement members can be displaced to a certain extent. Such a possible displacement of the engagement member is a well-known feature and already described in other documents, such as e. g. the document US 2013/0099536 A1. However, while such a displacement provides a certain flexibility to the corresponding restraining system as such, the re-configuring thereof as described above is still cumbersome and complex as the seat belts thereof are fixedly and unmovably mounted to the seat bench devices.

Document EP 2 738 095 A1 describes an aircraft seat assembly with a number of seats that may be used by different passengers. The aircraft seat assembly has a total seating area, which is subdivided into separate seating areas by adjustable armrests. A sliding mechanism for the armrests includes teeth that are configured to engage a base portion of a riser that can be coupled to a seatbelt harness fastener, which is, thus, movable by means of the sliding mechanism.

It is, therefore, an object of the present invention to provide a new seat bench device with a seat bench component and at least one restraining unit, said seat bench device having an easy to operate, flexible and configurable seating position scheme.

This object is solved by a seat bench device with a seat bench component and at least one restraining unit, said seat bench device comprising the features of claim 1.

More specifically, according to the present invention a seat bench device with a seat bench component and at least one restraining unit is provided. The seat bench component comprises a seating surface and a backrest. The at least one restraining unit comprises a harness for restraining a seat bench occupant or an object on the seat bench component. At least two guide elements are provided and the at least one restraining unit is movably arranged on the at least two guide elements for being movable on the at least two guide elements along the backrest at least between a storage position and an operating position, in which the harness is operational for buckling up of a seat bench occupant or an object.

Advantageously, each restraining unit is provided as a dedicated unit and completely and entirely movable. Thus, each restraining unit can easily and quickly be moved aside the backrest in order to provide a smooth and harness free backrest.

According to one aspect of the present invention, a seat bench device is provided that is adapted for a variable lateral positioning of associated restraining units that are provided for each seat bench occupant of or each object disposed on a preferably continuous seating surface of the seat bench component. This seat bench device is not limited to use in aircrafts and can likewise be applied to other vehicles in general. Furthermore, this seat bench device is not limited to a specific number of seat bench occupants or objects. Instead, any desired number of restraining units can be added to the inventive seat bench device.

Preferably, the inventive seat bench device comprises at least two linear guides as guide elements for fixing of the restraining units, and optionally a third linear guide. These linear guides can be fixed directly within the vehicles body, e. g. in fixed-wing aircrafts, busses, etc., if no energy absorbing system for limiting vertical deceleration in a possible crash situation is needed. In rotorcrafts, the linear guides are preferably connected to an associated energy absorbing system.

According to one aspect of the present invention, the linear guides can be of any profile, e. g. a common seat and cargo track. Furthermore, the linear guides do not necessarily have to be embraced by the restraining units, thus allowing an easy removal thereof.

Advantageously, the inventive seat bench device allows for an improved space consumption and comfort. In particular, a needed space for seat bench occupants is no longer determined by a fixed seat geometry or seat belts and is now only dependent on a naturally varying body size, i. e. shoulder width, of the seat bench occupants. More specifically, the real body size, i. e. shoulder width, of the seat bench occupants advantageously defines a respective seating density instead of a predefined seat geometry, so that an adjustable seating density and an improved seating comfort can be achieved. Furthermore, one or more of all provided restraining units can be moved aside, if not needed, thus allowing more space for respectively seated seat bench occupants or special mission equipment. This mutatis mutandis applies to objects that are disposed on the inventive seat bench device.

According to a preferred embodiment, the at least one first guide element is arranged in a region between the seating surface and the backrest. At least one second guide element is arranged in a region of a top end of the backrest.

According to a further preferred embodiment, the at least one first guide element and the at least one second guide element are embodied as linear rods.

Preferably, such linear rods comprise a circular or rectangular cross section. However, other cross sections are likewise applicable, such as e. g. oval and so on.

According to a further preferred embodiment, the at least one restraining unit comprises a plurality of slidable attachment units that are glidingly mounted to the at least two guide elements. The harness is mounted to the plurality of slidable attachment units.

According to one aspect of the present invention, all restraining units are identical and implemented as dedicated units. They can preferably be moved easily and independently on the preferentially three guide elements and can be fixed at desired and arbitrarily selectable lateral positions on the seat bench component with quick release fittings, preferably even by an untrained user.

Preferably, the guide elements lead all forces of the seat bench occupants or objects mass inertia that are occurring in a crash situation from corresponding restraining units into the seat bench device's structure. Thereby, upper guide elements hold corresponding head restraints and shoulder harnesses and a lower guide element that is arranged in a region between the backrest and the continuous seating surface holds corresponding pelvic harnesses. Each guide element can be of any suitable profile, for example tubes, rectangles or half enclosed profiles.

According to a further preferred embodiment, at least one locking device is provided. The at least one locking device is at least adapted for locking the at least one restraining unit on at least one of the at least two guide elements in the operating position.

According to a further preferred embodiment, the at least one attachment element of the plurality of slidable attachment units is equipped with the at least one locking device.

According to a further preferred embodiment, the at least one restraining unit comprises a folding device that is adapted for maintaining the at least one restraining unit at least in the storage position in a folded state.

According to a further preferred embodiment, the folding device is operable for unfolding the at least one restraining unit in the operating position.

According to a further preferred embodiment, the at least one restraining unit comprises a plurality of slidable attachment elements that are interconnected in pairs by means of associated frame members and glidingly mounted to the at least two guide elements. The harness is mounted to the plurality of slidable attachment elements. The folding device comprises a plurality of struttings that are pivotally mounted to the plurality of slidable attachment elements. The plurality of struttings is rotatable relative to the associated frame members for unfolding the at least one restraining unit.

According to a further preferred embodiment, a plurality of restraining units is provided, each being movably arranged on the at least two guide elements for being movable on the at least two guide elements along the backrest at least between the storage position and an associated operating position.

Advantageously, use of such movable restraining units enables creation of variable seating positions on the seat bench component. Preferably each restraining unit is a dedicated unit and can be moved independently to a desired lateral seating position on the preferably continuous seating surface of the seat bench component. Furthermore, each restraining unit can be folded and moved aside, if not needed. This allows for flexibility in seat bench occupant number on the basis of adjustments to personal anthropometrics and to specific mission requirements. For instance, with the inventive seat bench device it is possible to fit e. g. three 95th-Percentile male or four 5th-Percentile female troopers on the seat bench component.

According to a further preferred embodiment, a sled device is provided for glidingly mounting the seat bench component to associated supporting stanchions.

According to a further preferred embodiment, the seat bench component and the at least two guide elements are rigidly mounted to the sled device.

According to a further preferred embodiment, the sled device comprises an energy absorbing system that is adapted for absorbing energy in a crash situation.

According to one aspect of the present invention, the inventive seat bench device is provided with two or more vertical stanchions and the sled device. The two or more vertical stanchions are preferably connected via four aircraft seat and cargo track quick release fittings to corresponding floor and ceiling interface points of the vehicle. Thus, the required interface points can advantageously be limited to a minimum number of interface points.

The sled device preferably comprises the backrest, the continuous seating surface and the preferentially horizontally arranged guide elements for the restraining units, as well as plastically deformable tubes of the preferably two energy absorbing systems. The sled device as a whole can preferably move downwards along the vertical stanchions in a crash situation. During this downward movement, the tubes move through the energy absorbing system and provide a protective acceleration during seat stroking. The two energy absorbing systems are preferably fixed on the vertical stanchions and do not move relative to the vertical stanchions in the crash situation.

According to a further preferred embodiment, the at least one restraining unit comprises a head restraining component.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a schematic view of a seat bench device according to the present invention,
- Figure 2 shows a schematic view of a seat bench and stanchion system according to the present invention in normal operation mode,
- Figure 3 shows a schematic view of the seat bench and stanchion system of Figure 2 in an exemplary crash situation,
- Figure 4 shows a perspective front view of an exemplary realization of the seat bench and stanchion system of Figure 2 with three unfolded restraining units, each having an inventive restraining unit folding device,
- Figure 5 shows a perspective front view of the exemplary realization of the seat bench and stanchion system of Figure 4 with four unfolded restraining units,
- Figure 6 shows a perspective rear view of the exemplary realization of the seat bench and stanchion system of Figure 4 and Figure 5 with four folded restraining units,
- Figure 7 shows an enlarged detail VII of Figure 6,
- Figure 8 shows a perspective front view of the seat bench device of Figure 4 with a single restraining unit in folded and unfolded state,
- Figure 9 shows a perspective rear view of the seat bench device of Figure 4 with a single restraining unit in folded and unfolded state,
- Figure 10 shows a perspective front view of the seat bench device of Figure 4 with a single restraining unit during an exemplary unfolding operation, and
- Figure 11 shows a perspective rear view of the restraining unit folding device of Figure 4.

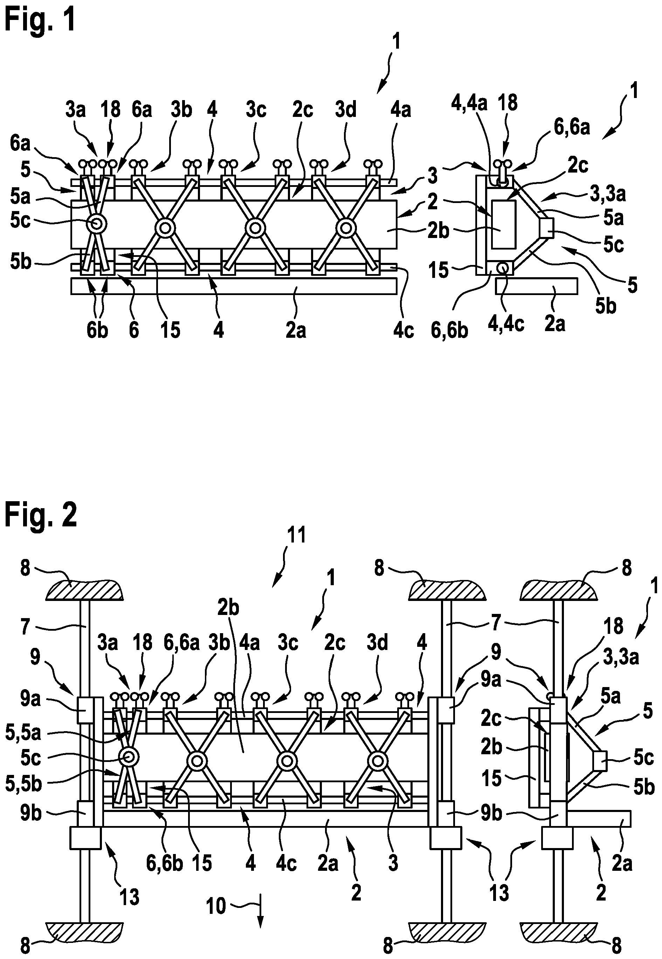

Figure 1 shows a seat bench device 1 according to the present invention. The seat bench device 1 comprises a seat bench component 2 and is preferentially adapted for use in a vehicle, preferably in an aircraft and, more preferably, in a rotorcraft.

The seat bench component 2 illustratively comprises at least a seating surface 2a and a backrest 2b with a top end 2c that illustratively points away from the seating surface 2a. The seating surface 2a is preferably embodied as a continuous seating surface and the backrest 2b is preferably embodied as a continuous backrest. As already described above, the term "continuous seating surface" should be construed in the context of the present invention as defining a seating surface that is uninterrupted, i. e. not interrupted by gaps, protrusions and so on. This applies mutatis mutandis to the term "continuous backrest".

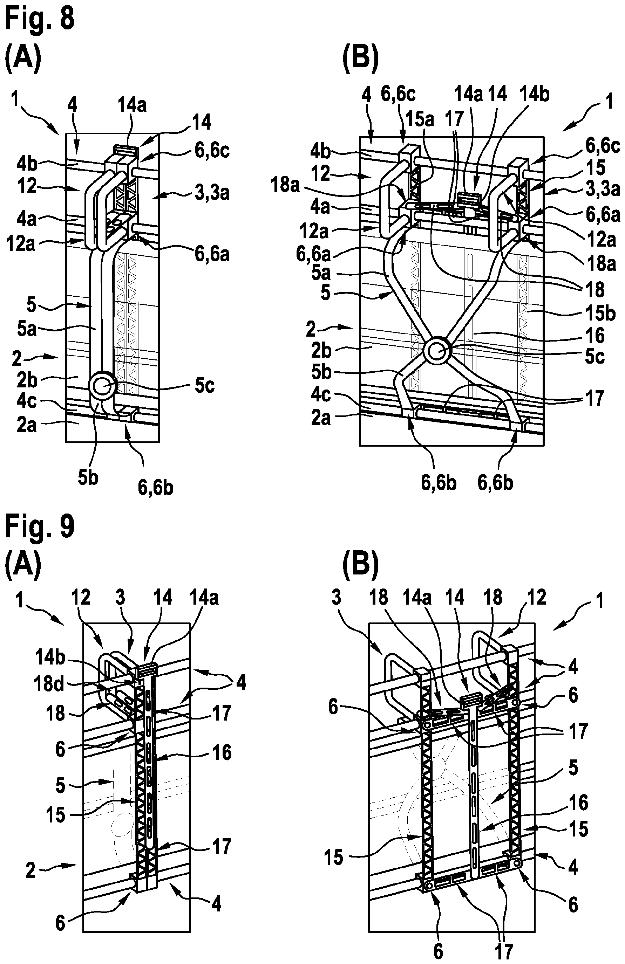

According to one aspect of the present invention, the seat bench device 1 is equipped with a modular restraining system 3 that comprises at least one and exemplarily four preferably foldable restraining units 3a, 3b, 3c, 3d. The restraining unit 3a preferably comprises a harness 5 for restraining a seat bench occupant or object on the seat bench component 2. Furthermore, the restraining unit 3a preferentially comprises release levers 18, as described in more detail below with reference to Figure 8 to Figure 11.

By way of example, the harness 5 is composed of a shoulder harness 5a and a pelvic harness 5b. The shoulder and pelvic harnesses 5a, 5b are preferably interconnected and can be released from each other by means of an associated harness release buckle 5c.

It should be noted that only the harness 5 of the restraining unit 3a is labelled in Figure 1. However, it should be noted that preferably also each one of the other restraining units 3b, 3c, 3d comprises such a harness for restraining a seat bench occupant or object on the seat bench component 2, as illustrated in Figure 1. However, these harnesses are not labelled for simplicity and clarity of the drawings and for brevity and conciseness of the description only the harness 5 is described in detail.

It should further be noted that the composition of the harness 5 with the shoulder harness 5a and the pelvic harness 5b is only illustrated and described by way of example and not for limiting the invention accordingly. Instead, any suitable restraining unit is contemplated, such as e. g. seat-belt based restraining units and so on. Consequently, the term "harness" is supposed to embrace such alternative restraining units in the context of the present invention.

According to one aspect of the present invention, the seat bench device 1 is provided with a plurality of guide elements 4. Illustratively, the plurality of guide elements 4 comprises at least two and, by way of example, at least one first guide element 4c and at least one second guide element 4a. Preferentially, the at least one first guide element 4c and the at least one second guide element 4a lead the occurring forces of a seat bench occupant's or object's mass inertia from the restraining units 3a, 3b, 3c, 3d into an underlying seat bench structure.

Preferably, the first guide element 4c is arranged in a region between the seating surface 2a and the backrest 2b. The second guide element 4a is preferably arranged in a region of the top end 2c of the backrest 2b. Both, the first and second guide elements 4c, 4a are preferentially embodied as linear rods. Such linear rods may be provided with any suitable cross-section, such as e. g. circular, rectangular, oval and so on. Furthermore, the first and second guide elements 4c, 4a may generally be equipped with any suitable profile, such as e. g. tubes, rectangles or half enclosed profiles.

According to one aspect of the present invention, each one of the restraining units 3a, 3b, 3c, 3d is movably arranged on the first and second guide elements 4c, 4a for being movable on these guide elements 4c, 4a along the backrest 2b at least between a storage position and an operating position, in which the corresponding harness 5 is operational for buckling up of a seat bench occupant or object, preferably in a crashworthy manner. The operating position is preferably arbitrarily selectable and not necessarily predefined for each one of the restraining units 3a, 3b, 3c, 3d.

By way of example, the restraining unit 3a is shown in the storage position, while the restraining units 3b, 3c, 3d are shown in their respective operating positions. Preferentially, the restraining unit 3a is in a folded state in the storage position and the restraining units 3b, 3c, 3d are in unfolded states in their respective operating positions.

Preferably, the restraining unit 3a comprises a plurality of slidable attachment units 6 that are glidingly mounted to the first and second guide elements 4c, 4a. More specifically, each one of the slidable attachment units 6 comprises preferably at least shoulder harness attachment elements 6a, which are glidingly mounted to the second guide element 4a, and pelvic harness attachment elements 6b, which are glidingly mounted to the first guide element 4c.

The attachment elements 6a, 6b of the slidable attachment unit 6 are preferably interconnected in pairs by means of associated frame members 15 and preferentially adapted for mounting of the harness 5 to the slidable attachment unit 6. More specifically, the shoulder harness 5a is preferably mounted to the shoulder harness attachment elements 6a, and the pelvic harness 5b is preferably mounted to the pelvic harness attachment elements 6b.

It should be noted that only the slidable attachment unit 6 of the restraining unit 3a is labelled in Figure 1. However, preferably also each one of the other restraining units 3b, 3c, 3d comprises such a slidable attachment unit for glidingly mounting these other restraining units 3b, 3c, 3d to the first and second guide elements 4c, 4a, as illustrated in Figure 1. Nevertheless, these slidable attachment units are not labelled for simplicity and clarity of the drawings and for brevity and conciseness of the description only the slidable attachment unit 6 is described in detail.

Figure 2 shows the seat bench device 1 of Figure 1, which is provided with a sled device 9 according to one aspect of the present invention. The sled device 9 preferentially serves as an interface to associated seat bench stanchions 7 and is preferably provided for glidingly mounting the seat bench component 2 of Figure 1 to associated seat bench stanchions 7. The latter illustratively define together with the seat bench device 1 and the sled device 9 a seat bench and stanchion system 11. By way of example, the sled device 9 is connected to at least two, and illustratively exactly two, associated seat bench stanchions 7.

The seat bench stanchions 7 are preferably connected via suitable aircraft seat and cargo track quick release fittings e. g. to corresponding floor and ceiling interface points of the vehicle. Illustratively, these floor and ceiling interface points are defined by an associated aircraft fuselage 8, in particular by an associated rotorcraft fuselage 8.

According to one aspect of the present invention, the seat bench component 2 and at least the first and second guide elements 4c, 4a of Figure 1 are rigidly mounted to the sled device 9. The latter preferably further comprises an energy absorbing system 13 that is adapted for absorbing energy in a crash situation of the vehicle, to which the seat bench and stanchion system 11 is mounted, e. g. an aircraft.

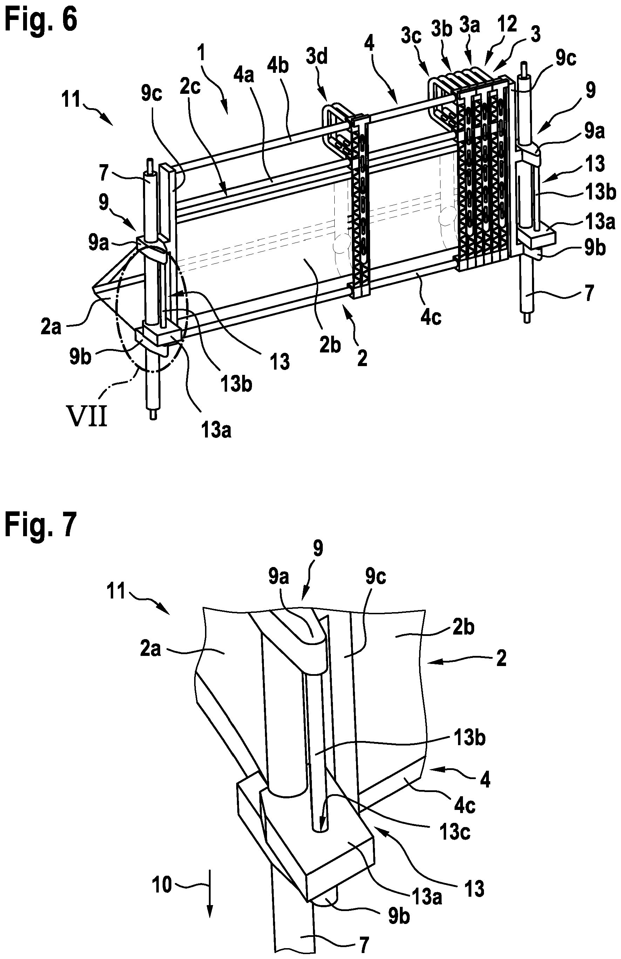

It should be noted that the sled device 9 and the energy absorbing system 13 are provided as safety equipment of the inventive seat bench and stanchion system 11 for rendering the latter crashworthy. More specifically, in a crash situation of e. g. an aircraft, to which the seat bench and stanchion system 11 is mounted, the seat bench device 1 can be accelerated in direction of an arrow 10. In this case, the sled device 9 performs a gliding - in Figure 2 downwardly directed - movement, as indicated with the arrow 10, along the associated seat bench stanchions 7. During this gliding downward movement, the energy absorbing system 13 decreases acceleration and force acting on a corresponding seat bench occupant or object. An exemplary energy absorbing system is described below with reference to Figure 7.

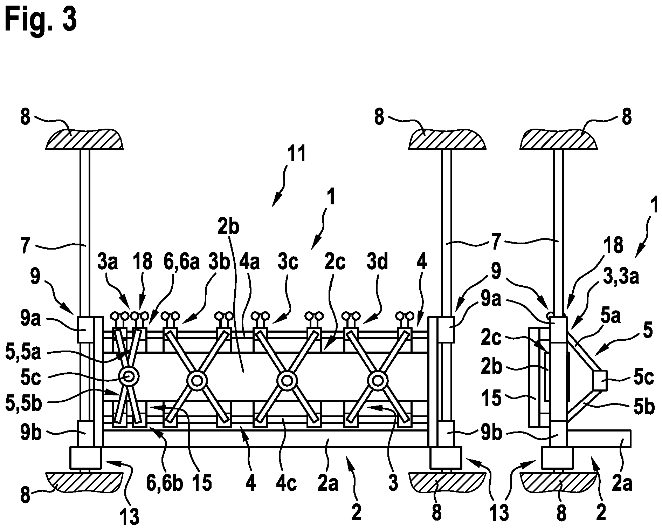

Figure 3 shows the seat bench and stanchion system 11 of Figure 2 after occurrence of a crash situation. As can be seen from Figure 3 in comparison to Figure 2, the seat bench device 1 has glided downward by means of the sled device 9 of Figure 2 in direction of the arrow 10 of Figure 2, illustratively until the energy absorbing system 13 has stroken the aircraft fuselage 8 and, thus, stopped the gliding downward movement. During the gliding downward movement, the energy absorbing system 13 has decreased acceleration and force acting on a corresponding seat bench occupant or object, as described above.

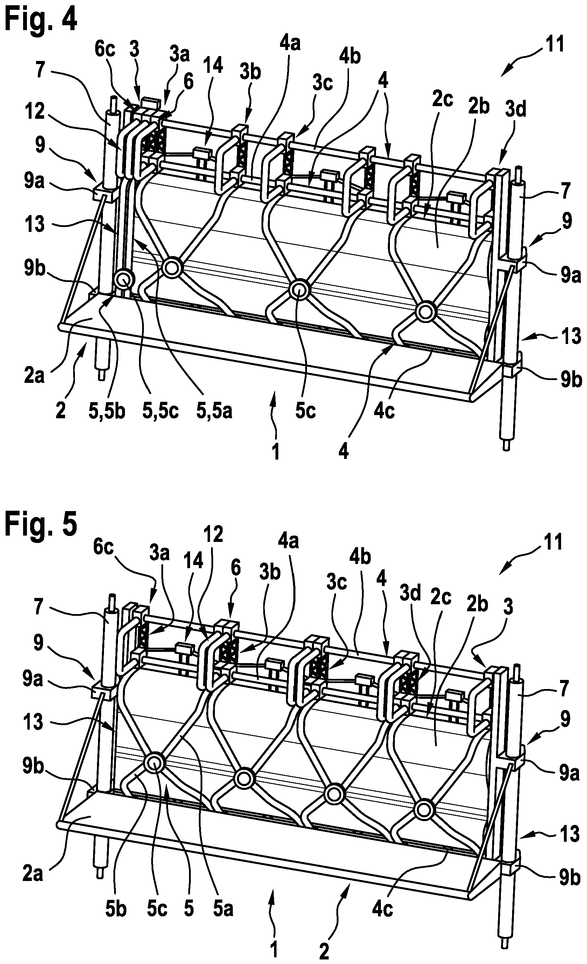

Figure 4 shows the seat bench and stanchion system 11 of Figure 2 with the seat bench device 1 having the seat bench component 2 and the restraining units 3a, 3b, 3c, 3d, and with the seat bench stanchions 7. As described above, the seat bench device 1 preferably comprises the energy absorbing system 13 and further comprises the first and second guide elements 4c, 4a that are rigidly mounted to the sled device 9.

As described above, the seat bench device 1 is, by way of example, equipped with the four restraining units 3a, 3b, 3c, 3d of Figure 2, wherein the restraining unit 3a is exemplarily arranged in a folded state in the storage position, while the other restraining units 3b, 3c, 3d are arranged in the unfolded state in their respective operating positions. Such a configuration is e. g. adapted to allow seating of three 95th-Percentile male troopers on the seat bench component 2.

However, in contrast to what is described above, the restraining unit 3a, and similarly preferably also each one of the other restraining units 3b, 3c, 3d, now comprises an associated head restraining component 12, which is described in more detail below with reference to Figure 8, as well as an associated folding device 14. Preferably, the head restraining component 12 is provided with associated slidable attachment elements 6c of the slidable attachment unit 6. The folding device 14 is preferentially adapted for maintaining the restraining unit 3a at least in its storage position in the folded state and is operable for unfolding the restraining unit 3a after having moved it to its operating position, as illustrated with respect to the restraining units 3b, 3c, 3d.

According to one aspect of the present invention, the seat bench device 1 now further comprises an additional, optional third guide element 4b in addition to the first and second guide elements 4c, 4a. This third guide element 4b is preferably also rigidly mounted to the sled device 9 and preferably - in Figure 4 vertically - spaced apart from the second guide element 4a, such that the slidable attachment elements 6c are glidingly mounted to the third guide element 4b.

Figure 5 shows the seat bench and stanchion system 11 of Figure 4 with the seat bench device 1 having the seat bench component 2 and all restraining units 3a, 3b, 3c, 3d being exemplarily arranged in the unfolded state in respective operating positions, and with the seat bench stanchions 7. Such a configuration is e. g. adapted to allow seating of four 5th-Percentile female troopers on the seat bench component 2.

Figure 6 shows the seat bench and stanchion system 11 of Figure 4 with the seat bench device 1 having the energy absorbing system 13, the seat bench component 2 and all restraining units 3a, 3b, 3c, 3d with the head restraining components 12 being exemplarily in the folded state, and with the seat bench stanchions 7. The seat bench device 1 further comprises the first, second and third guide elements 4c, 4a, 4b, which are rigidly mounted to the sled device 9, preferably via suitable vertical connection bars 9c that are arranged at axial ends of the first, second and third guide elements 4c, 4a, 4b.

According to one aspect of the present invention, the sled device 9 comprises upper sled vertical guides 9a and lower sled vertical guides 9b, which are respectively spaced apart from each other in the longitudinal direction of the seat bench stanchions 7 and glidingly mounted to corresponding ones of the seat bench stanchions 7. These vertical guides 9a, 9b can be rigidly attached to the vertical connection bars 9c, or manufactured as integral components thereof, i. e. in one-piece structure.

Preferably, an energy absorbing base 13a of the energy absorbing system 13 is respectively arranged between each upper sled vertical guide 9a and a corresponding lower sled vertical guide 9b. Furthermore, preferentially at least one, and exemplarily exactly one, energy transmitting tube 13b is respectively arranged between each upper sled vertical guide 9a and a corresponding energy absorbing base 13a, as illustrated in greater detail in Figure 7.

Figure 7 shows the seat bench component 2 and the energy absorbing system 13 of the seat bench and stanchion system 11 of Figure 6 in greater detail for further illustrating the arrangement of the energy transmitting tube 13b between the upper sled vertical guide 9a of the sled device 9 and the energy absorbing base 13a of the seat bench stanchion 7 of Figure 6. The energy transmitting tube 13b is preferably embodied as a plastically deformable tube, which is preferentially on one axial end supported by the upper sled vertical guide 9a and which engages on the other axial end at least partly an opening 13c provided in the energy absorbing base 13a.

In an exemplary crash situation, the seat bench component 2 and, consequently, the sled device 9 are accelerated in the direction of the arrow 10 of Figure 2. Thus, the sled device 9 performs a gliding movement along the seat bench stanchion 7, which remains stationary, in the direction of the arrow 10. During this gliding movement, the upper sled vertical guide 9a pushes the energy transmitting tube 13b through the opening 13c provided in the energy absorbing base 13a. Preferably, the energy transmitting tube 13b is at least partly plastically deformed while being pushed through the opening 13c, so that crash energy is absorbed by decreasing acceleration and force acting on a seat bench occupant or object in the crash situation.

Figure 8 shows the seat bench device 1 with the seat bench component 2 of Figure 6 in front view. For simplicity and clarity of the drawings, however, the seat bench device 1 is only illustrated with the restraining unit 3a that comprises the harness 5, the head restraining component 12 and the folding device 14 of the modular restraining system 3 of Figure 6. The head restraining component 12 preferably comprises lateral head retainers 12a.

Part (A) of Figure 8 shows the restraining unit 3a in the folded state of Figure 4. According to one aspect of the present invention, the restraining unit 3a can be maintained in the folded state by a release hand gear 14a of the folding device 14.

Part (B) of Figure 8 shows the restraining unit 3a in the unfolded state of Figure 5. According to one aspect of the present invention, the restraining unit 3a is maintained in the unfolded state by the release hand gear 14a.

More specifically, the release hand gear 14a preferably comprises pins 14b of the folding device 14 that engage openings (18d in Figure 9) provided in the release levers 18 of Figure 1 to Figure 3 for blocking the restraining unit 3a in the unfolded state. The release levers 18 are preferentially connected to the shoulder harness attachment elements 6a of the slidable attachment unit 6 of Figure 1 to Figure 3.

Preferably, the release levers 18 are connected in a rotatable manner to the shoulder harness attachment elements 6a at associated pivot points 18a by means of trapezoid threads. Preferentially, the release levers 18 are arranged in parallel to the lateral head retainers 12a, i. e. in planes that are respectively spanned by the lateral head retainers 12a.

According to one aspect of the present invention, the folding device 14 further comprises a plurality of struttings 17, and illustratively four struttings 17, which are pivotally mounted to the slidable attachment unit 6, and preferentially to its shoulder harness attachment elements 6a and its pelvic harness attachment elements 6b. Thus, the plurality of struttings 17 is rotatable relative to the frame members 15 of Figure 1 to Figure 3 in order to allow an unfolding of the restraining unit 3a. Illustratively, the plurality of struttings 17 is further pivotally mounted to a vertical strutting 16, which is in turn connected to the release hand gear 14.

Preferably, the frame members 15 comprise at least two and, exemplarily, a first and a second vertical frame member element 15a, 15b. The first and second vertical frame member elements 15a, 15b are preferably respectively connected to the first, second and third guide elements 4b, 4a, 4c and corresponding ones of the plurality of struttings 17.

Figure 9 shows the seat bench device 1 with the seat bench component 2 and the restraining unit 3a as well as the folding device 14 of Figure 8 in rear view. Similar to Figure 8, Part (A) of Figure 9 shows the restraining unit 3a in the folded state and Part (B) of Figure 9 shows the restraining unit 3a in the unfolded state.

As described above with reference to Figure 8, the release hand gear 14a of the folding device 14 preferably comprises pins 14b that engage openings provided in the release levers 18 of Figure 1 to Figure 3 for blocking the restraining unit 3a in the unfolded state. These openings are labelled with the reference sign "18d" in Figure 9.

Preferably, the pins 14b are further adapted for blocking the restraining unit 3a in the folded state. More specifically, according to one aspect of the present invention, the pins 14b are adapted for preventing a rotational movement of at least a part of the plurality of struttings 17 in the folded state of the restraining unit 3a.

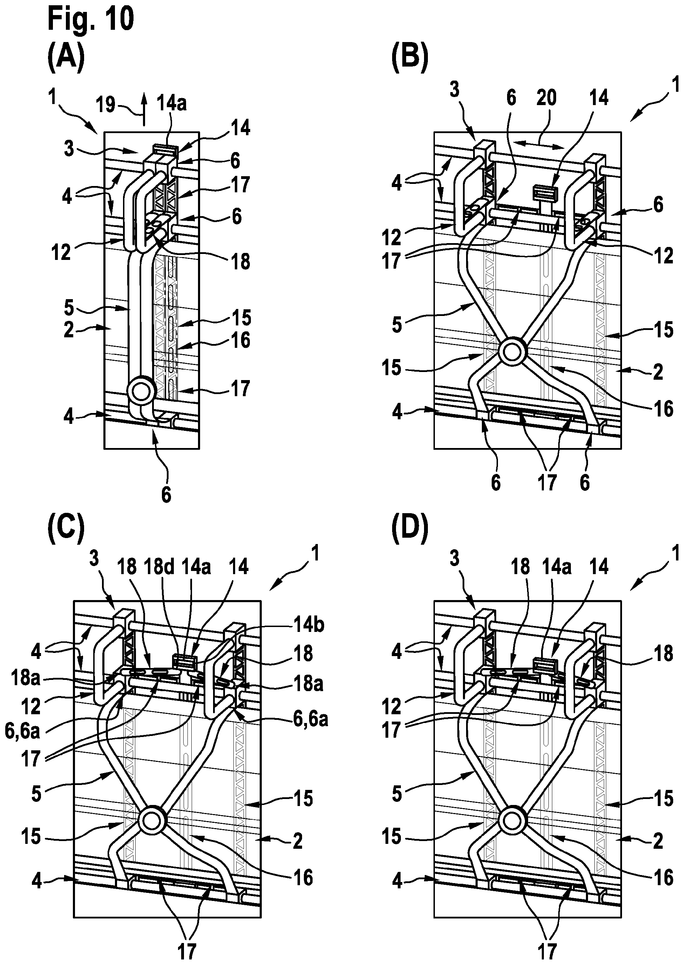

Figure 10 shows the seat bench device 1 with the seat bench component 2 of Figure 8 and Figure 9 for illustrating an exemplary unfolding operation by means of the folding device 14. Similar to Figure 8 and Figure 9, the seat bench device 1 is only illustrated with the restraining unit 3a that comprises the harness 5, the head restraining component 12 with the lateral head retainers 12a and the folding device 14 of the modular restraining system 3.

Part (A) of Figure 10 shows the restraining unit 3a in the folded state. In an initial unfolding step, the release hand gear 14a of the folding device 14 is moved during a release movement into a predetermined releasing direction 19. Exemplarily, this release movement consists in a pulling upwards of the release hand gear 14a.

Preferably, the release movement is adapted for releasing at least the above-mentioned part of the plurality of struttings 17. Thus, they may subsequently perform a rotational movement.

Part (B) of Figure 10 shows a first subsequent unfolding step. In this first subsequent unfolding step, the first and second vertical frame member elements 15a, 15b of the frame members 15 that are connected to the plurality of struttings 17 are moved during an opening movement into a respective opening direction, as indicated with an arrow 20. This opening movement is e. g. performed by grasping the lateral head retainers 12a and pulling them apart into opposed directions, as illustrated with the arrow 20. Alternatively, only one of the lateral head retainers 12a is moved into one of the directions indicated with the arrow 20.

More specifically, the opening movement results in a rotation of the plurality of struttings 17 relative to the respective frame members 15 such that the vertical strutting 16 is moved downwards - in Figure 10 -, i. e. into a direction that is opposed to the arrow 19. The opening movement is preferably stopped, i. e. blocked, when the plurality of struttings 17 is arranged at least approximately perpendicular to the vertical strutting 16.

However, it should be noted that the vertical strutting 16 can alternatively be rigidly attached to the first and second guide elements 4c, 4a, e. g. via suitable openings provided therein. In this case, the plurality of struttings 17 rotates relative to the rigidly attached vertical strutting 16.

Part (C) of Figure 10 shows a second subsequent unfolding step. In this second subsequent unfolding step, the release levers 18 of the folding device 14 are rotated around the shoulder harness attachment elements 6a at the associated pivot points 18a by means of trapezoid threads towards the release hand gear 14a such that the pins 14b thereof coincide with the openings 18d of the release levers 18.

Part (D) of Figure 10 shows a final unfolding step. In this final unfolding step, the release hand gear 14a is pushed towards the release levers 18. Illustratively, the release hand gear 14a is pushed downwards - in Figure 10 -, i. e. into a direction that is opposed to the arrow 19. This pushing can be supported by suitable spring elements provided at the release hand gear 14a. Thus, the pins 14b are pressed into the openings 18d of the release levers 18 so that the restraining unit 3a is blocked in the folded state.

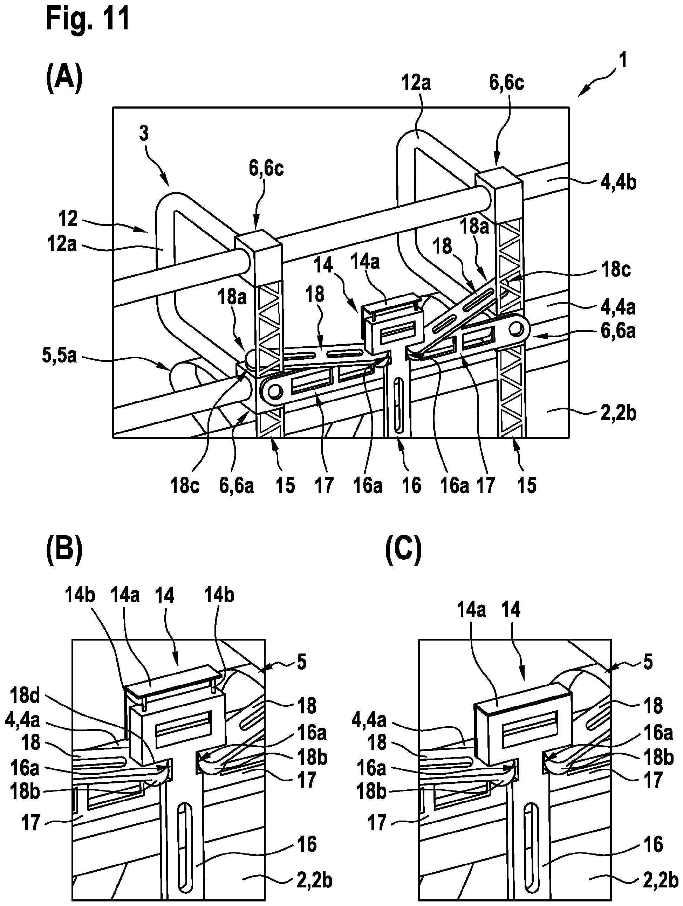

Figure 11 shows the unfolding steps according to Part (C) and Part (D) of Figure 10 in greater detail. More specifically, Part (A) and Part (B) of Figure 11 show the seat bench device 1 of the preceding figures after accomplishment of the unfolding step of Part (C) of Figure 10, i. e. prior to the final unfolding step of Part (D) of Figure 10, and Part (C) of Figure 11 shows the seat bench device 1 of the preceding figures after accomplishment of the unfolding step of Part (D) of Figure 10.

Part (A) shows the release levers 18 of the folding device 14 that were rotated around the shoulder harness attachment elements 6a at the associated pivot points 18a by means of trapezoid threads towards the release hand gear 14a. Consequently, the pins 14b of the release hand gear 14a coincide with the openings (18d in Figure 10) of the release levers 18.

According to one aspect of the present invention, at least one locking device 18c is provided for each one of the release levers 18. This at least one locking device 18c is preferably embodied as a quick release fitting and e. g. comprises the above-mentioned trapezoid thread and is at least adapted for locking the restraining unit 3a on the guide element 4a in the operating position of the restraining unit 3a, e. g. by pressing friction linings against the guide element 4a. Preferentially, the at least one locking device 18c is arranged on an associated one of the slidable attachment elements 6a of the slidable attachment unit 6.

Illustratively, the release levers 18 are rotated until they are at least partly received in clamping grooves 16a of the vertical strutting 16 of the folding device 14, preferably until a further rotation of the release levers 18 is blocked by these clamping grooves 16a. By way of example, the release levers 18 can be clamped, e. g. press-fitted into the clamping grooves 16a.

Part (B) of Figure 11 further illustrates this exemplary clamping of the release levers 18 in the clamping grooves 16a. By way of example, the clamping is achieved by notch-like clamping elements 18b provided at the release levers 18. Part (B) further illustrates the pins 14b of the release hand gear 14a.

Part (C) shows an exemplary blocking of the release levers 18 at the vertical strutting 16 by means of the pins 14b, which now engage the openings 18d of the release levers 18. Thus, the release levers 18 are blocked at the vertical strutting 16 in their rotated state so that an undesired folding of the restraining unit 3a by means of the folding device 14 is securely and reliably prevented.

It should be noted that modifications to the above described embodiments are within the common knowledge of the person skilled in the art. For instance, an additional special restraining unit can be provided for mission equipment that is adapted to fixate equipment in a crashworthy manner on the seat bench component. Furthermore, heavy special mission equipment can be allocated next to a seat bench occupant, such as a trooper, on the seat bench component, thus allowing for a better accessibility and enabling faster and easier ingress and egress. Moreover, the continuous seating surface could be used as a gurney or additional stowage space, and so on.

### Reference List

- 1: seat bench device
- 2: seat bench component
- 2a: continuous seating surface
- 2b: continuous backrest
- 2c: continuous backrest top end
- 3: modular restraining system
- 3a, 3b, 3c, 3d: restraining units
- 4: guide elements
- 4a: first upper guide element
- 4b: second upper guide element
- 4c: lower guide element
- 5: harness
- 5a: shoulder harness
- 5b: pelvic harness
- 5c: harness release buckle
- 6: slidable attachment units
- 6a: shoulder harness attachment elements
- 6b: pelvic harness attachment elements
- 6c: head restraining component attachment element
- 7: seat bench stanchions
- 8: aircraft fuselage
- 9: seat bench sled device
- 9a: upper sled vertical guides
- 9b: lower sled vertical guides
- 9c: vertical connection bars
- 10: downward sliding direction
- 11: seat bench and stanchion system
- 12: head restraining component
- 12a: lateral head retainers
- 13: energy absorbing system
- 13a: energy absorbing base
- 13b: energy transmitting tube
- 13c: base opening
- 14: restraining unit folding device
- 14a: release hand gear
- 14b: release hand gear pins
- 15: restraining unit vertical frame members
- 15a: first vertical frame member element
- 15b: second vertical frame member element
- 16: central vertical strutting
- 16a: central vertical strutting clamping grooves
- 17: horizontal struttings
- 18: release levers
- 18a: release lever pivot points
- 18b: release lever clamping elements
- 18c: release lever locking device
- 18d: release lever opening
- 19: release hand gear releasing direction
- 20: restraining unit opening directions

## Claims

1. A seat bench device (1) with a seat bench component (2) and at least one restraining unit (3a, 3b, 3c, 3d), said seat bench component (2) comprising a seating surface (2a) and a backrest (2b), and said at least one restraining unit (3a, 3b, 3c, 3d) comprising a harness (5) for restraining a seat bench occupant on said seat bench component (2), **characterized in that** at least two guide elements (4a, 4c) are provided, said at least one restraining unit (3a, 3b, 3c, 3d) being movably arranged on said at least two guide elements (4a, 4c) for being movable on said at least two guide elements (4a, 4c) along said backrest (2b) at least between a storage position and an operating position, in which said harness (5) is operational for buckling up of a seat bench occupant.

2. The seat bench device (1) according to claim 1,
**characterized in that** at least one first guide element (4c) is arranged in a region between said seating surface (2a) and said backrest (2b), and that at least one second guide element (4a) is arranged in a region of a top end (2c) of said backrest (2b).

3. The seat bench device (1) according to claim 2,
**characterized in that** said at least one first guide element (4c) and said at least one second guide element (4a) are embodied as linear rods.

4. The seat bench device (1) according to claim 1,
**characterized in that** said at least one restraining unit (3a, 3b, 3c, 3d) comprises a plurality of slidable attachment units (6) that are glidingly mounted to said at least two guide elements (4a, 4c), said harness (5) being mounted to said plurality of slidable attachment units (6).

5. The seat bench device (1) according to claim 4,
**characterized in that** at least one locking device (18c) is provided, said at least one locking device (18c) being at least adapted for locking said at least one restraining unit (3a, 3b, 3c, 3d) on at least one of said at least two guide elements (4a, 4c) in said operating position.

6. The seat bench device (1) according to claim 5,
**characterized in that** at least one slidable attachment element (6a) of said plurality of slidable attachment units (6) is equipped with said at least one locking device (18c).

7. The seat bench device (1) according to claim 1,
**characterized in that** said at least one restraining unit (3a, 3b, 3c, 3d) comprises a folding device (14) that is adapted for maintaining said at least one restraining unit (3a, 3b, 3c, 3d) at least in said storage position in a folded state.

8. The seat bench device (1) according to claim 7,
**characterized in that** said folding device (14) is operable for unfolding said at least one restraining unit (3a, 3b, 3c, 3d) in said operating position.

9. The seat bench device (1) according to claim 8,
**characterized in that** said at least one restraining unit (3a, 3b, 3c, 3d) comprises a plurality of slidable attachment elements (6a, 6b) that are interconnected in pairs by means of associated frame members (15) and glidingly mounted to said at least two guide elements (4a, 4c), said harness (5) being mounted to said plurality of slidable attachment elements (6a, 6b), wherein said folding device (14) comprises a plurality of struttings (17) that are pivotally mounted to said plurality of slidable attachment elements (6a, 6b), said plurality of struttings (17) being rotatable relative to said associated frame members (15) for unfolding said at least one restraining unit (3a, 3b, 3c, 3d).

10. The seat bench device (1) according to claim 1,
**characterized in that** a plurality of restraining units (3a, 3b, 3c, 3d) is provided, each being movably arranged on said at least two guide elements (4a, 4c) for being movable on said at least two guide elements (4a, 4c) along said backrest (2b) at least between said storage position and an associated operating position.

11. The seat bench device (1) according to claim 1,
**characterized in that** a sled device (9) is provided for glidingly mounting said seat bench component (2) to associated supporting stanchions (7).

12. The seat bench device (1) according to claim 11,
**characterized in that** said seat bench component (2) and said at least two guide elements (4a, 4c) are rigidly mounted to said sled device (9).

13. The seat bench device (1) according to claim 12,
**characterized in that** said sled device (9) comprises an energy absorbing system (13) that is adapted for absorbing energy in a crash situation.

14. The seat bench device (1) according to claim 1,
**characterized in that** said at least one restraining unit (3a, 3b, 3c, 3d) comprises a head restraining component (12).

## Patentansprüche

1. Sitzbankvorrichtung (1) mit einer Sitzbankkomponente (2) und mindestens einer Rückhalteeinheit (3a, 3b, 3c, 3d), wobei die Sitzbankkomponente (2) eine Sitzfläche (2a) und eine Rückenlehne (2b) umfasst, und die mindestens eine Rückhalteeinheit (3a, 3b, 3c, 3d) einen Gurt (5) zum Rückhalten eines Sitzbanknutzers auf der Sitzbankkomponente (2) umfasst,
**dadurch gekennzeichnet, dass** mindestens zwei Führungselemente (4a, 4c) vorgesehen sind, wobei die mindestens eine Rückhalteeinheit (3a, 3b, 3c, 3d) beweglich an den mindestens zwei Führungselementen (4a, 4c) angeordnet ist, um an den mindestens zwei Führungselementen (4a, 4c) entlang der Rückenlehne (2b) mindestens zwischen einer Aufbewahrungsposition und einer Betriebsposition beweglich zu sein, in der der Gurt (5) zum Anschnallen eines Sitzplatznutzers nutzbar ist.

2. Sitzbankvorrichtung (1) nach Anspruch 1, **dadurch gekennzeichnet, dass** mindestens ein erstes Führungselement (4c) in einem Bereich zwischen der Sitzfläche (2a) und der Rückenlehne (2b) angeordnet ist, und dass mindestens ein zweites Führungselement (4a) in einem Bereich eines oberen Endes (2c) der Rückenlehne (2b) angeordnet ist.

3. Sitzbankvorrichtung (1) nach Anspruch 2, **dadurch gekennzeichnet, dass** das mindestens eine erste Führungselement (4c) und das mindestens eine zweite Führungselement (4a) als Längsstangen ausgebildet sind.

4. Sitzbankvorrichtung (1) nach Anspruch 1, **dadurch gekennzeichnet, dass** die mindestens eine Rückhalteeinheit (3a, 3b, 3c, 3d) eine Mehrzahl von verschiebbaren Befestigungseinheiten (6) umfasst, die gleitend an den mindestens zwei Führungselementen (4a, 4c) montiert sind, wobei der Gurt (5) an der Mehrzahl von verschiebbaren Befestigungseinheiten (6) montiert ist.

5. Sitzbankvorrichtung (1) nach Anspruch 4, **dadurch gekennzeichnet, dass** mindestens eine Verriegelungsvorrichtung (18c) vorgesehen ist, wobei die mindestens eine Verriegelungsvorrichtung (18c) mindestens geeignet ist, die mindestens eine Rückhalteeinheit (3a, 3b, 3c, 3d) an mindestens einem der mindestens zwei Führungselemente (4a, 4c) in der Betriebsstellung zu verriegeln.

6. Sitzbankvorrichtung (1) nach Anspruch 5, **dadurch gekennzeichnet, dass** mindestens ein verschiebbares Befestigungselement (6a) aus der Mehrzahl der verschiebbaren Befestigungseinheiten (6) mit der mindestens einen Verriegelungsvorrichtung (18c) ausgestattet ist.

7. Sitzbankvorrichtung (1) nach Anspruch 1, **dadurch gekennzeichnet, dass** die mindestens eine Rückhalteeinheit (3a, 3b, 3c, 3d) eine Klappvorrichtung (14) umfasst, die zum Halten der mindestens einen Rückhalteeinheit (3a, 3b, 3c, 3d) mindestens in der Speicherposition in einem eingeklappten Zustand eingerichtet ist.

8. Sitzbankvorrichtung (1) nach Anspruch 7, **dadurch gekennzeichnet, dass** die Klappvorrichtung (14) zum Ausklappen der mindestens einen Rückhalteeinheit (33, 3b, 3c, 3d) in die Betriebsstellung nutzbar ist.

9. Sitzbankvorrichtung (1) nach Anspruch 8, **dadurch gekennzeichnet, dass** die mindestens eine Rückhalteeinheit (3a, 3b, 3c, 3d) eine Mehrzahl von verschiebbaren Befestigungselementen (6a, 6b) umfasst, die paarweise über zugeordnete Rahmenelemente (15) miteinander verbunden und gleitend an den mindestens zwei Führungselementen (4a, 4c) befestigt sind, wobei der Gurt (5) an der Mehrzahl von verschiebbaren Befestigungselementen (6a, 6b) befestigt ist, wobei die Klappvorrichtung (14) eine Mehrzahl von Streben (17) umfasst, die schwenkbar an der Mehrzahl von verschiebbaren Befestigungselementen (6a, 6b) montiert sind, wobei die Mehrzahl von Streben (17) relativ zu den zugeordneten Rahmenelementen (15) drehbar ist, um die mindestens eine Rückhalteeinheit (3a, 3b, 3c, 3d) aufzuklappen.

10. Sitzbankvorrichtung (1) nach Anspruch 1, **dadurch gekennzeichnet, dass** eine Mehrzahl von Rückhalteeinheiten (3a, 3b, 3c, 3d) vorgesehen ist, die jeweils beweglich an den mindestens zwei Führungselementen (4a, 4c) angeordnet sind, um an den mindestens zwei Führungselementen (4a, 4c) entlang der Rückenlehne (2b) mindestens zwischen der Speicherposition und einer zugehörigen Betriebsposition beweglich zu sein.

11. Sitzbankvorrichtung (1) nach Anspruch 1, **dadurch gekennzeichnet, dass** eine Schlittenvorrichtung (9) zum gleitenden Befestigen der Sitzbankkomponente (2) an zugeordneten Stützstreben (7) vorgesehen ist.

12. Sitzbankvorrichtung (1) nach Anspruch 11, **dadurch gekennzeichnet, dass** die Sitzbankkomponente (2) und die mindestens zwei Führungselemente (4a, 4c) fest mit der Schlittenvorrichtung (9) verbunden sind.

13. Sitzbankvorrichtung (1) nach Anspruch 12, **dadurch gekennzeichnet, dass** die Schlittenvorrichtung (9) ein energieabsorbierendes System (13) umfasst, das zum Absorbieren von Energie in einer Crashsituation geeignet ist.

14. Sitzbankvorrichtung (1) nach Anspruch 1, **dadurch gekennzeichnet, dass** die mindestens eine Rückhalteeinheit (3a, 3b, 3c, 3d) eine Kopfrückhaltekomponente (12) umfasst.

## Revendications

1. Agencement de siège d'assise (1) avec un composant de siège d'assise (2) et au moins une unité de retenue (3a, 3b, 3c, 3d), ledit composant de siège d'assise (2) comprenant une surface d'assise (2a) et un dossier (2b), et ladite au moins une unité de retenue (3a, 3b, 3c, 3d) comprenant un harnais (5) pour retenir l'occupant d'un siège d'assise sur ledit composant de siège d'assise (2),
**caractérisé en ce qu'**au moins deux éléments de guidage (4a, 4c) sont prévus, ladite au moins une unité de retenue (3a, 3b, 3c, 3d) étant arrangée de façon déplaçable sur lesdits au moins deux éléments de guidage (4a, 4c) afin d'être déplaçable sur lesdits au moins deux éléments de guidage (4a, 4c) le long dudit dossier (2b) au moins entre une position de repos et une position de fonctionnement, dans lequel ledit harnais (5) est fonctionnel pour attacher l'occupant d'un siège d'assise.

2. Agencement de siège d'assise (1) selon la revendication 1, **caractérisé en ce qu'**au moins un premier élément de guidage (4c) est aménagé dans une zone située entre ladite surface d'assise (2a) et ledit dossier (2b), et **en ce qu'**au moins un second élément de guidage (4a) est aménagé dans une zone d'une extrémité supérieure (2c) dudit dossier (2b).

3. Agencement de siège d'assise (1) selon la revendication 2, **caractérisé en ce que** ledit au moins un premier élément de guidage (4c) et ledit au moins un second élément de guidage (4a) sont mis en œuvre sous forme de bielles linéaires.

4. Agencement de siège d'assise (1) selon la revendication 1, **caractérisé en ce que** ladite au moins une unité de retenue (3a, 3b, 3c, 3d) comprend une pluralité d'unités de fixation coulissantes (6) qui sont montées à coulissement sur lesdits au moins deux éléments de guidage (4a, 4c), ledit harnais (5) étant monté sur ladite pluralité d'unités de fixation coulissantes (6).

5. Agencement de siège d'assise (1) selon la revendication 4, **caractérisé en ce qu'**au moins un dispositif de verrouillage (18c) est prévu, ledit au moins un dispositif de verrouillage (18c) étant apte au moins au verrouillage de ladite au moins une unité de retenue (3a, 3b, 3c, 3d) sur au moins un desdits au moins deux éléments de guidage (4a, 4c) dans ladite position de fonctionnement.

6. Agencement de siège d'assise (1) selon la revendication 5, **caractérisé en ce qu'**au moins un élément de fixation coulissant (6a) de ladite pluralité d'unités de fixation coulissantes (6) est équipé dudit au moins un dispositif de verrouillage (18c).

7. Agencement de siège d'assise (1) selon la revendication 1, **caractérisé en ce que** ladite au moins une unité de retenue (3a, 3b, 3c, 3d) comprend un dispositif de repliage (14) qui est apte au maintien de ladite au moins une unité de retenue (3a, 3b, 3c, 3d) au moins dans ladite position de repos dans un état replié.

8. Agencement de siège d'assise (1) selon la revendication 7, **caractérisé en ce que** ledit dispositif de repliage (14) est manœuvrable pour le dépliage de ladite au moins une unité de retenue (3a, 3b, 3c, 3d) dans ladite position de fonctionnement.

9. Agencement de siège d'assise (1) selon la revendication 8, **caractérisé en ce que** ladite au moins une unité de retenue (3a, 3b, 3c, 3d) comprend une pluralité d'éléments de fixation coulissants (6a, 6b) qui sont raccordés entre eux par paires au moyen de membres de cadre associés (15) et montés à coulissement sur lesdits au moins deux éléments de guidage (4a, 4c), ledit harnais (5) étant monté sur ladite pluralité d'éléments de fixation coulissants (6a, 6b), dans lequel ledit dispositif de repliage (14) comprend une pluralité d'entretoises (17) qui sont montées à pivotement sur ladite pluralité d'éléments de fixation coulissants (6a, 6b), ladite pluralité d'entretoises (17) étant apte à pivoter par rapport auxdits membres de cadres associés (15) pour le dépliage de ladite au moins une unité de retenue (3a, 3b, 3c, 3d).

10. Agencement de siège d'assise (1) selon la revendication 1, **caractérisé en ce que** une pluralité d'unités de retenue (3a, 3b, 3c, 3d) est prévue, chacune étant aménagée de façon déplaçable sur lesdits au moins deux éléments de guidage (4a, 4c) afin d'être déplaçable sur lesdits au moins deux éléments de guidage (4a, 4c) le long dudit dossier (2b) au moins entre ladite position de repos et une position de fonctionnement associée.

11. Agencement de siège d'assise (1) selon la revendication 1, **caractérisé en ce qu'**un dispositif à coulisseau (9) est prévu pour le montage à coulissement dudit composant de siège d'assise (2) sur les montants (7) de support associés.

12. Agencement de siège d'assise (1) selon la revendication 11, **caractérisé en ce que** ledit composant de siège d'assise (2) et lesdits au moins deux éléments de guidage (4a, 4c) sont montés de façon rigide sur ledit dispositif d'élément coulissant (9).

13. Agencement de siège d'assise (1) selon la revendication 12, **caractérisé en ce que** ledit dispositif à coulisseau (9) comprend un système d'absorption d'énergie (13) qui est apte à absorber l'énergie en cas de crash.

14. Agencement de siège d'assise (1) selon la revendication 1, **caractérisé en ce que** ladite au moins une unité de retenue (3a, 3b, 3c, 3d) comprend un composant de retenue de la tête (12).
